# FASCICULE DE BREVET EUROPEEN

(11) **EP 3 642 424 B1**
(45) Date de publication et mention de la délivrance du brevet: **09.06.2021**
(21) Numéro de dépôt: 18737959.9
(22) Date de dépôt: 20.06.2018
(51) Int. Cl.: E04F 11/02, E04F 11/025, E04F 11/035, E04F 11/112, B21D 39/03, B21J 15/02, F16B 5/04

(54) **PROCÉDÉ D'ASSEMBLAGE DE PLAQUES POUR ESCALIER METALLIQUE**
VERFAHREN ZUR MONTAGE VON PLATTEN FÜR EINE METALLTREPPE
METHOD FOR ASSEMBLING PLATES FOR A METAL STAIRCASE

(30) Priorité: 22.06.2017 FR 1755681
(43) Date de publication de la demande: 29.04.2020
(73) Titulaire: Atelier Made, 38000 Grenoble (FR)
(72) Inventeur: MAZET, Cyrille, 38000 Grenoble (FR); DERVIEUX, Benoit, 42520 Bessey (FR)
(74) Mandataire: de Jong, Jean Jacques
(86) Numéro de dépôt international: PCT/FR2018/051481
(87) Numéro de publication internationale: WO 2018/234691

(56) Documents cités:
- EP-A1- 2 025 828
- AT-U1- 13 548
- DE-U1- 20 318 491
- GB-A- 193 260
- US-A- 1 593 418

## Description

### Domaine technique

L'invention est relative aux escaliers métalliques, et plus généralement à un système d'assemblage de plaques métalliques.

### Arrière-plan

Pour assembler des plaques on peut utiliser diverses techniques de rivetage. Les techniques de rivetage connues impliquent l'utilisation d'un rivet que l'on insère dans deux trous en correspondance des deux plaques à assembler. Les documents DE 203 491 U1 et GB 193 260 A décrivent de telles techniques.

Les techniques de rivetage les plus anciennes utilisent des rivets pleins comportant une tête et une tige. La tige est passée dans les trous des plaques à assembler, de sorte que l'épaulement entre la tige et la tête repose contre l'une des plaques, et l'extrémité distale de la tige dépasse de l'autre plaque. La tête étant mise en appui sur une contre-bouterolle, l'extrémité distale de la tige est déformée à chaud ou à froid par martèlement pour former une deuxième tête qui prend les plaques en étau avec la première tête. Une telle technique de rivetage est adaptée à l'assemblage permanent de plaques de forte épaisseur, par exemple d'épaisseur supérieure à 5 mm, mais nécessite un accès aux deux côtés des plaques à assembler.

Les techniques de rivetage modernes évitent cette contrainte par l'utilisation de rivets « aveugles », qui sont généralement creux et ne font plus appel à une déformation par martèlement ou à chaud. Ces techniques sont cependant limitées à l'assemblage de plaques minces, ou tôles, d'épaisseur inférieure à 3 mm.

Avec ces techniques de rivetage connues, si les plaques à assembler sont perpendiculaires, l'une d'elles comporte une partie pliée à angle droit, ou bien, si les plaques sont épaisses, on utilise une équerre qui est rivetée sur les deux plaques. Il en résulte que l'assemblage de plaques perpendiculaires par rivetage est plus complexe, notamment si les plaques sont épaisses.

Pour assembler deux tôles minces (épaisseur inférieure à 3 mm) perpendiculairement, il est également connu de prévoir sur le bord de l'une des tôles des languettes destinées à pénétrer dans des lumières correspondantes de la deuxième tôle. Les extrémités des languettes qui dépassent de la deuxième tôle sont alors pliées ou vrillées pour empêcher l'extraction des languettes. Cette technique n'est pas adaptée à des plaques d'épaisseur supérieure à 3 mm.

### Résumé

On prévoit de façon générale un procédé d'assemblages de plaques, comprenant les étapes consistant à découper à plat une première plaque métallique d'au moins 3 mm d'épaisseur de manière à former un bord duquel s'étendent des tenons de section rectangulaire ; découper à plat des lumières associées aux tenons dans une deuxième plaque d'épaisseur inférieure à la longueur des tenons ; appliquer la première plaque perpendiculairement à la deuxième en faisant pénétrer les tenons dans les lumières ; et frapper les extrémités distales des tenons dépassant de la deuxième plaque de manière à former des têtes de rivet prenant appui sur les pourtours des lumières.

Les plaques peuvent avoir une épaisseur inférieure à 8 mm et le découpage à plat être effectué par faisceau laser.

Le découpage à plat peut être effectué par jet d'eau.

Le procédé peut comprendre l'étape consistant à découper à plat la deuxième plaque selon une ligne ayant un profil en contre-dépouille passant par les lumières, formant deux segments séparables par un mouvement de cisaillement.

Le procédé peut être appliqué à l'assemblage de chacune des marches d'un escalier sur au moins un limon.

Le procédé peut servir à produire un assemblage de plaques, comprenant une première plaque métallique d'au moins 3 mm d'épaisseur ayant un bord duquel s'étendent des tenons de section rectangulaire formés dans l'épaisseur de la plaque ; et une deuxième plaque ayant des lumières dans lesquelles sont logés des tenons respectifs de la première plaque, chaque tenon ayant une extrémité distale dépassant de la deuxième plaque, laquelle extrémité forme une tête de rivet prenant appui sur le pourtour de la lumière correspondante.

La deuxième plaque peut être séparée en deux segments selon une ligne de découpe passant par les lumières, les deux segments étant retenus l'un contre l'autre grâce à un profil en contre-dépouille de la ligne de découpe, et étant retenus latéralement entre le bord de la première plaque et les têtes de rivet.

La première plaque peut être une marche d'escalier et la deuxième plaque un limon.

Le bord de la marche peut comprendre un épaulement du côté formant le nez de la marche, appuyant dans une encoche du bord supérieur du limon.

Les première et deuxième plaques peuvent être obtenues par un procédé de découpage à plat.

### Description sommaire des dessins

Des modes de réalisation seront exposés dans la description suivante, faite à titre non limitatif en relation avec les figures jointes parmi lesquelles :
- La figure 1 est une vue en perspective d'un mode de réalisation de marche d'escalier permettant un montage direct sur un limon adapté à l'aide d'une technique peu complexe, similaire au rivetage ;
- Les figures 2A à 2C illustrent trois étapes d'assemblage d'une marche sur un limon ; et
- Les figure 3A et 3B, représentent respectivement une vue d'ensemble de deux limons d'escalier adaptés à des marches du type de la figure 1, et une vue de détail d'un assemblage de deux segments de limon.

### Description de modes de réalisation

Dans les modes de réalisation décrits ci-après, on cherche à réaliser un assemblage permanent simple à mettre en oeuvre entre deux plaques perpendiculaires de forte épaisseur, c'est-à-dire ayant une épaisseur supérieure à 3 mm, de préférence supérieure à 5 mm, voire 8 mm dans certaines applications. Le système d'assemblage est décrit dans le cadre de la réalisation d'un escalier métallique, où les marches sont sous forme de plaques métalliques assemblées à des limons, également sous forme de plaques métalliques.

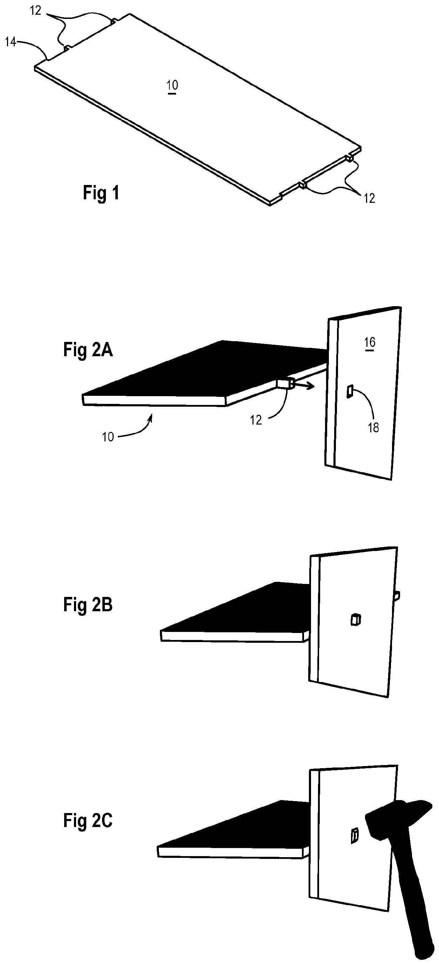

La figure 1 est une vue en perspective d'un mode de réalisation de marche d'escalier 10. La marche 10, pour simplifier la fabrication, peut être une simple plaque métallique, par exemple en acier, ayant certains éléments découpés dans l'épaisseur de la plaque par un procédé de découpage à plat, comme un découpage par faisceau laser ou par jet d'eau. Le découpage par faisceau laser permet de découper des plaques d'acier d'épaisseur jusqu'à 8 mm avec une qualité satisfaisante sans autre étape de finition, c'est-à-dire sans nécessiter un ébavurage des bords découpés. Si on souhaite réaliser des marches d'épaisseur supérieure à 8 mm, on préférera, pour avoir le même avantage, utiliser un découpage par jet d'eau, procédé plus complexe à mettre en oeuvre qu'un découpage par faisceau laser.

Plus spécifiquement, on a découpé la marche de manière à laisser sur chacun de ses bords latéraux des tenons 12, ici deux tenons. Il résulte du procédé de découpage à plat que les tenons sont de section rectangulaire et que leurs faces supérieure et inférieure sont dans les plans des faces supérieure et inférieure de la marche.

Pour des raisons d'esthétique, les tenons peuvent être de section carrée, et chaque bord latéral peut en outre comporter un épaulement 14 du côté destiné à former le nez de marche.

Lors d'un assemblage de la marche sur un limon, chaque tenon fait office d'une tige de rivet à frapper, et le bord de la marche fait office de la tête de rivet. Pour cette raison, le matériau de la marche est de préférence choisi pour favoriser le formage à froid. Un acier S235, classiquement utilisé pour les travaux de serrurerie, offre des caractéristiques satisfaisantes.

Les figures 2A à 2C illustrent trois étapes d'assemblage d'une telle marche 10 sur un limon 16. La marche et le limon sont représentés partiellement, et le procédé est illustré pour un seul tenon 12. Le limon 16 comporte des lumières 18 associées respectivement aux tenons 12. Le limon et les lumières 18 peuvent également être obtenus à partir d'une plaque découpée à plat. Le matériau des limons peut être le même que celui des marches.

A la figure 2A, la marche 10 est présentée perpendiculairement au limon 16, avec les tenons 12 en face des lumières 18.

A la figure 2B, la marche est appliquée contre le limon, en faisant pénétrer les tenons dans leurs lumières respectives du limon. Comme on l'aperçoit ici, la longueur des tenons est supérieure à l'épaisseur du limon, de sorte que l'extrémité distale de chaque tenon dépasse du limon. La quantité de matière en saillie du tenon est propre à former une tête de rivet prenant appui sur le pourtour de la lumière pour assurer un maintien ferme et durable de la marche contre le limon.

A la figure 2C, les parties en saillie des tenons sont frappées, par exemple à l'aide d'un marteau, de manière à former les têtes de rivet en refoulant la matière vers les pourtours des lumières. Comme cela est représenté, les tenons de section carrée permettent de former facilement des têtes pyramidales ayant un certain attrait esthétique.

De préférence, la section des lumières 18 est choisie pour obtenir un jeu faible ou nul autour des tenons 12, de manière que l'expansion des tenons provoquée par l'opération de rivetage rattrape le jeu et assure également un maintien par serrage.

Ces étapes peuvent être effectuées pour solidariser chaque marche d'abord d'un premier limon. Le deuxième limon est ensuite glissé sur les tenons restants de l'ensemble des marches fixées au premier limon.

Chaque marche, en acier épais, présente une masse importante qui peut rendre superflue l'utilisation d'une butée pour encaisser les chocs lors de la formation des têtes de rivet. En pratique, il suffit de retenir la marche à la main pendant que l'on frappe avec le marteau pour former la tête de rivet, ce qui facilite la procédure d'assemblage.

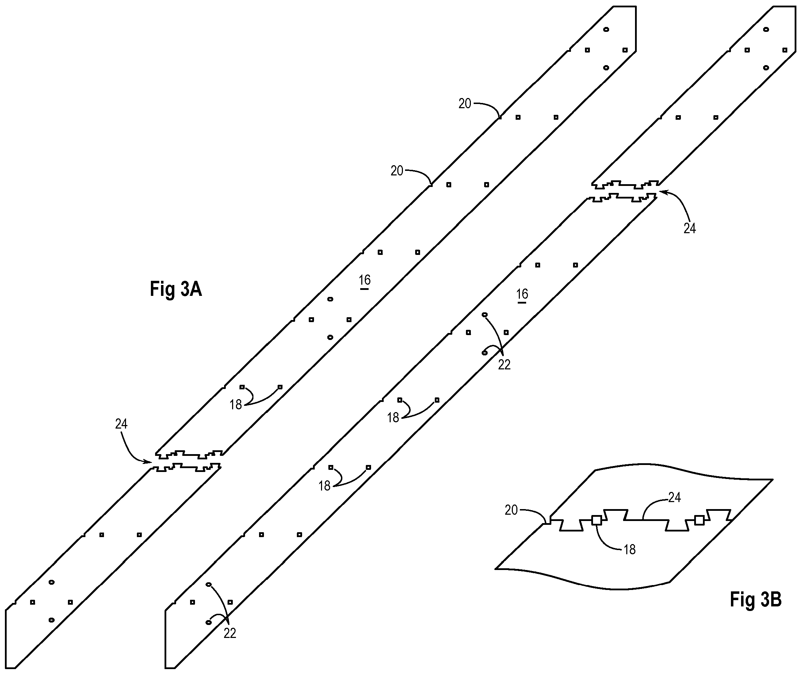

La figure 3A représente une paire de limons selon un exemple, utilisables avec des marches du type de la figure 1. Chaque limon 16 a une forme générale de parallélogramme, les petits côtés étant verticaux, et les côtés longs étant inclinés sensiblement à 45° dans cet exemple, pour former une échelle de meunier. Pour chaque marche, chaque limon comporte une paire de lumières 18, ici de section carrée, alignées sur un axe horizontal.

Lorsque les marches comportent des épaulements 14, comme cela est représenté à la figure 1, les limons comportent une encoche 20 sur le bord supérieur du limon, dans l'alignement de chaque paire de lumières 18. Chaque épaulement 14 est configuré pour reposer dans une encoche 20 correspondante, ce qui améliore la stabilité de la marche. Lorsque la profondeur des épaulements est égale à l'épaisseur des limons, les épaulements affleurent les faces externes des limons, ce qui améliore l'aspect esthétique.

Les limons peuvent en outre être munis de paires d'orifices 22 alignés verticalement pour fixer un garde-corps.

Comme on l'a précédemment indiqué, les limons peuvent être obtenus, comme les marches, par découpage à plat d'une plaque brute, par exemple une plaque d'acier. Les plaques d'acier brutes sont disponibles selon des dimensions standardisées qui peuvent être insuffisantes pour réaliser les limons à la longueur souhaitée. Pour atteindre néanmoins la longueur souhaitée, chaque limon peut être formé de plusieurs segments fixés bout à bout par des systèmes de jointure. Dans la figure 3A, chaque limon est formé de deux segments qui sont représentés séparés l'un de l'autre au niveau de leur système de jointure. Les systèmes de jointure sont de préférence décalés d'un limon à l'autre, comme cela est représenté, de manière qu'une zone de rigidité affaiblie résultant de la zone de jointure d'un des limons soit relayée en face par une zone pleine de l'autre limon.

Le mode de réalisation représenté du système de jointure entre segments de limon permet un assemblage sans nécessiter d'autres pièces que les marches munies de tenons à riveter, ni d'autre procédé de réalisation que la découpe à plat.

Pour cela, la ligne de découpe 24 entre deux segments de limon passe par une paire de lumières 18 et présente des formes en contre-dépouille, par exemple des queues d'aronde, pénétrant alternativement dans les deux segments, comme cela est représenté.

La figure 3B montre en détail le système de jointure, avec les deux segments de limon raccordés bout à bout. Le profil en contre-dépouille de la ligne de découpe 24 retient les deux segments dans toutes les directions du plan du limon, et offre une liberté de mouvement des segments en cisaillement, c'est-à-dire que les segments peuvent coulisser l'un par rapport à l'autre selon un axe perpendiculaire au plan du limon. Ce coulissement permet de raccorder les deux segments de manière provisoire dans une première étape.

Comme le représente la figure 3B, les lumières 18 servant à recevoir les tenons d'une marche sont à cheval sur la ligne de séparation 24. Ainsi, dans une deuxième étape, les tenons sont insérés dans ces lumières et les têtes de rivet sont formées. Il en résulte que chaque segment est retenu latéralement entre le bord de la marche et la tête de rivet, et que le mouvement de cisaillement est empêché définitivement.

De nombreuses variantes et modifications des modes de réalisation décrits ici apparaîtront à l'homme du métier. Bien que l'invention ait été décrite en relation avec un escalier à titre d'exemple, elle s'applique de façon générale à l'assemblage perpendiculaire de plaques épaisses dans des applications quelconques.

## Revendications

1. Procédé d'assemblages de plaques, comprenant les étapes suivantes :
• découper à plat une première plaque métallique (10) d'au moins 3 mm d'épaisseur de manière à former un bord duquel s'étendent des tenons de section rectangulaire (12) ;
• découper à plat des lumières (18) associées aux tenons (12) dans une deuxième plaque (16) d'épaisseur inférieure à la longueur des tenons (12);
• appliquer la première plaque (10) perpendiculairement à la deuxième (16) en faisant pénétrer les tenons (12) dans les lumières (18) ; **caractérisé en ce que** ce procédé comprend également l'étape suivante :
• frapper les extrémités distales des tenons (12) dépassant de la deuxième plaque (16) de manière à former des têtes de rivet prenant appui sur les pourtours des lumières (18).

2. Procédé selon la revendication 1, dans lequel les plaques (10, 16) ont une épaisseur
inférieure à 8 mm et le découpage à plat est effectué par faisceau laser.

3. Procédé selon la revendication 1, dans lequel le découpage à plat est effectué par jet d'eau.

4. Procédé selon la revendication 1, comprenant l'étape suivante :
• découper à plat la deuxième plaque (16) selon une ligne (24) ayant un profil en contre-dépouille passant par les lumières (18), formant deux segments séparables par un mouvement de cisaillement.

5. Procédé selon la revendication 1 appliqué à l'assemblage de chacune des marches d'un escalier sur au moins un limon.

6. Assemblage de plaques, comprenant :
• une première plaque métallique (10) d'au moins 3 mm d'épaisseur ayant un bord duquel s'étendent des tenons de section rectangulaire (12) formés dans l'épaisseur de la plaque (10) ; et
• une deuxième plaque (16) ayant des lumières (18) dans lesquelles sont logés des tenons (12) respectifs de la première plaque (10), chaque tenon (12) ayant une extrémité distale dépassant de la deuxième plaque (16), laquelle extrémité forme une tête de rivet prenant appui sur le pourtour de la lumière (18) correspondante.

7. Assemblage selon la revendication 6, dans lequel la deuxième plaque (16) est séparée en deux segments selon une ligne de découpe (24) passant par les lumières (18), les deux segments étant retenus l'un contre l'autre grâce à un profil en contre-dépouille de la ligne de découpe, et étant retenus latéralement entre le bord de la première plaque (10) et les têtes de rivet.

8. Assemblage selon la revendication 6, dans lequel la première plaque (10) est une marche d'escalier et la deuxième plaque (16) est un limon.

9. Assemblage selon la revendication 8, dans lequel le bord de la marche comprend un épaulement (14) du côté formant le nez de la marche, appuyant dans une encoche (20) du bord supérieur du limon.

10. Assemblage selon la revendication 6, dans lequel les première et deuxième plaques (10,16) sont obtenues par un procédé de découpage à plat.

## Patentansprüche

1. Verfahren zum Anordnen von Platten, die folgenden Schritte umfassend:
• Zurichten einer ersten Metallplatte (10) einer Dicke von mindestens 3 mm, so dass eine Kante entsteht, von der sich Zapfen mit rechteckigem Querschnitt (12) erstrecken;
• Zurichten von den Zapfen (12) zugeordneten Öffnungen (18) in einer zweiten Platte (16) einer Dicke, die geringer ist als die Länge der Zapfen (12);
• Anbringen der ersten Platte (10) senkrecht zur zweiten (16), indem die Zapfen (12) veranlasst werden, in die Öffnungen (18) einzudringen; **dadurch gekennzeichnet, dass** dieses Verfahren außerdem den folgenden Schritt umfasst:
• Anschlagen der distalen, aus der zweiten Platte (16) herausragenden Enden der Zapfen (12), so dass Nietköpfe gebildet werden, die an den Umfängen der Öffnungen (18) anliegen.

2. Verfahren nach Anspruch 1, wobei die Platten (10, 16) eine Dicke von unter 8 mm aufweisen und das Zurichten durch einen Laserstrahl erfolgt.

3. Verfahren nach Anspruch 1, wobei das Zurichten durch einen Wasserstrahl erfolgt.

4. Verfahren nach Anspruch 1, die folgenden Schritte umfassend:
• Zurichten der zweiten Platte (16) entlang einer Linie (24) mit einem Hinterschnittprofil, die durch die Öffnungen (18) verläuft, wobei zwei Segmente gebildet werden, die durch eine Scherbewegung trennbar sind.

5. Verfahren nach Anspruch 1, angewendet auf die Anordnung jeder der Stufen einer Treppe auf mindestens einer Wange.

6. Plattenanordnung, umfassend:
• eine erste Metallplatte (10) einer Dicke von mindestens 3 mm mit einer Kante, von der sich Zapfen mit rechteckigem Querschnitt (12) erstrecken, die in der Dicke der Platte (10) ausgebildet sind; und
• eine zweite Platte (16) mit Öffnungen (18), in denen entsprechende Zapfen (12) der ersten Platte (10) aufgenommen sind, wobei jeder Zapfen (12) ein distales, aus der zweiten Platte (16) herausragendes Ende aufweist, wobei dieses Ende einen Nietkopf bildet, der am Umfang der entsprechenden Öffnung (18) anliegt.

7. Anordnung nach Anspruch 6, wobei die zweite Platte (16) entlang einer durch die Öffnungen (18) verlaufenden Schnittlinie (24) in zwei Segmente getrennt ist, wobei die beiden Segmente mittels eines Hinterschnittprofils der Schnittlinie zusammengehalten werden und seitlich zwischen der Kante der ersten Platte (10) und den Nietköpfen gehalten werden.

8. Anordnung nach Anspruch 6, wobei die erste Platte (10) eine Treppenstufe ist und die zweite Platte (16) eine Wange ist.

9. Anordnung nach Anspruch 8, wobei die Kante der Stufe auf der Seite, die die Nase der Stufe bildet, einen Vorsprung (14) umfasst, der in einer Kerbe (20) in der Oberkante der Wange anliegt.

10. Anordnung nach Anspruch 6, wobei die erste und die zweite Platte (10, 16) durch ein Zurichtverfahren erhalten werden.

## Claims

1. A method of assembling plates, comprising the following steps:
• cutting a first metal plate (10) having a thickness of at least 3 mm such as to form an edge from which rectangular cross-section studs (12) extend;
• cutting slots (18) associated with the studs (12) in a second plate (16) having a thickness less than the length of the studs (12);
• applying the first plate (10) perpendicularly to the second (16) while inserting the studs (12) into the slots (18);
**characterised in that** the method further includes the following step:
• striking the distal ends of the studs (12) projecting from the second plate (16) to form rivet heads resting on the perimeters of the slots (18).

2. The method according to claim 1, wherein the plates (10, 16) have a thickness of less than 8 mm and the cutting is performed by laser beam.

3. The method according to claim 1, wherein the cutting is performed by water jet.

4. The method according to claim 1, comprising the following step:
• cutting the second plate (16) along a line (24) with an undercut profile passing through the slots (18), forming two segments separable by a shearing movement.

5. The method according to claim 1 applied to assembling each of the steps of a staircase on at least one stringer.

6. Assembly comprising:
• a first metal plate (10) having a thickness of at least 3 mm, including an edge from which rectangular cross-section studs (12) extend within the thickness of the plate (10); and
• a second plate (16) having slots (18) in which respective studs (12) of the first plate (10) are received, each stud (12) having a distal end projecting from the second plate (16), which end forms a rivet head resting on the periphery of the corresponding slot (18).

7. The assembly according to claim 6, wherein the second plate (16) is separated into two segments along a cut line (24) passing through the slots (18), the two segments being held together by an undercut profile of the cut line, and being held laterally between the edge of the first plate (10) and the rivet heads.

8. The assembly according to claim 6, wherein the first plate (10) is a stair step and the second plate (16) is a stringboard.

9. The assembly according to claim 8, wherein the edge of the step has a shoulder (14) on the side forming the nose of the step, pressing into a notch (20) in the upper edge of the stringboard.

10. The assembly according to claim 6, wherein the first and second plates (10, 16) are obtained by a cutting process.
